# FASCICULE DE BREVET EUROPEEN

(11) **EP 2 386 810 B1**
(45) Date de publication et mention de la délivrance du brevet: **17.08.2016**
(21) Numéro de dépôt: 11165370.5
(22) Date de dépôt: 09.05.2011
(51) Int. Cl.: F25B 41/06

(54) **Dispositif de régulation de détente à organe de contrôle externe déporté**
Expansionsventil mit externer Steuerungsvorrichtung
Expansion regulation device with outer control member

(30) Priorité: 10.05.2010 FR 1001992
(43) Date de publication de la demande: 16.11.2011
(73) Titulaire: Valeo Systemes Thermiques, 78320 Le Mesnil Saint Denis (FR)
(72) Inventeur: Benouali, Jugurtha, 92140 Clamart (FR)
(74) Mandataire: Vieillevigne, Sébastien Nicolas Bernard

(56) Documents cités:
- EP-A2- 1 055 888
- DE-A1- 19 631 914
- FR-A1- 2 539 855
- GB-A- 2 336 420

## Description

L'invention est du domaine des installations de chauffage, ventilation, et/ou climatisation comportant un circuit de climatisation, destinées à équiper un véhicule automobile comprenant un organe de détente. L'invention concerne plus particulièrement un dispositif de régulation de détente de l'organe de détente intégré à un tel circuit de climatisation.

Le circuit de climatisation est parcouru par un fluide réfrigérant, autrement appelé fluide frigorigène, et comprend, notamment, un compresseur, un refroidisseur de gaz ou condenseur, un organe de détente et un évaporateur, agencés dans cet ordre selon le sens de circulation du fluide réfrigérant dans le circuit de climatisation.

L'organe de détente a pour fonction d'assurer une détente du fluide réfrigérant en abaissant la pression préalablement à la traversée de l'évaporateur. En conséquence, le circuit de climatisation comprend une partie dite haute pression, agencée entre une sortie du compresseur et une entrée de l'organe de détente et une partie dite basse pression, agencée entre une sortie de l'organe de détente et une entrée du compresseur.

L'organe de détente est parcouru, d'une part, par le fluide réfrigérant dans le but d'assurer la détente de celui-ci et, d'autre part, par le fluide réfrigérant après son passage dans l'évaporateur où un bulbe thermostatique est soumis à la pression et à la température du fluide réfrigérant à basse pression. Ce type d'organe de détente est connu sous l'appellation d'organe de détente thermostatique.

Dans l'organe de détente thermostatique, le bulbe thermostatique agit sur une bille par l'intermédiaire d'une tige d'actionnement. La bille est généralement installée dans un cône de sorte à libérer un passage plus ou moins grand par lequel circule le fluide réfrigérant et à travers lequel la détente s'effectue. La bille est maintenue contre le cône et contre la tige d'actionnement par une force exercé par un boisseau équipé d'un ressort. La position du boisseau est donc déterminante pour assurer le niveau de détente.

Dans certains organes de détente thermostatiques, la position du boisseau est configurée par le fabriquant d'organes de détente en fonction de paramètres dépendants du circuit de climatisation, du bulbe thermostatique et d'une surchauffe recherchée en sortie d'évaporateur. Toutefois, cette position est figée et est immuable une fois que l'organe de détente est utilisé dans le circuit de climatisation.

D'autres types de dispositifs de détente thermostatiques comportent un boisseau dont la position varie au moyen d'un moteur électrique. Un tel organe de détente thermostatique est décrit dans le document EP 1 055 888 A2.

Cependant, ce dernier type d'organe de détente thermostatique n'est pas optimisé pour une utilisation dans un véhicule automobile. En effet, le véhicule comprend une paroi de séparation d'un compartiment moteur d'un habitacle du véhicule. Pour des raisons acoustiques, l'organe de détente est généralement installé du côté du compartiment moteur et à proximité de la paroi de séparation de sorte que la distance qui le sépare de l'évaporateur soit la plus faible possible.

Cette configuration impose que le moteur électrique couplé à l'organe de détente thermostatique soit résistant aux contraintes du compartiment moteur, en particulier en ce qui concerne la température ambiante, pouvant atteindre 120°C. Le moteur électrique présente donc des protections thermiques ou une conception compliquée, qui se révèle être particulièrement coûteuse.

DE 196 319 14 montre un dispositif de régulation de détente selon le préambule de la revendication 1.

Le but de la présente invention est donc de résoudre les inconvénients décrits ci-dessus principalement en proposant un organe de détente et un dispositif de régulation de détente de l'organe de détente de réalisation simple et de conception moins coûteuse.

L'invention a donc pour objet un dispositif de régulation de détente d'un circuit de climatisation ayant les caractéristiques de la revendication 1.

La séparation physique de l'organe de contrôle externe et de l'organe de détente permet d'installer l'organe de contrôle externe du côté de l'habitacle alors que l'organe de détente est avantageusement installé dans le compartiment moteur.

Le système d'entrainement transmet un mouvement entre l'organe de contrôle externe et l'organe de détente, par exemple un mouvement de rotation.

L'organe de détente selon l'invention s'étend selon un axe longitudinal primaire et l'organe de contrôle externe s'étend selon un axe longitudinal secondaire, les axes étant parallèles et distincts.

Ainsi, le dispositif d'entraînement, par exemple une courroie ou un arbre de transmission, peut être aisément installé entre l'organe de contrôle externe et le dispositif de détente.

Dans un exemple de réalisation, l'organe de détente comprend une poulie menée reliée mécaniquement à un moyen de réglage de la détente de l'organe de détente. De plus, l'organe de contrôle externe comprend une poulie menante reliée à la poulie menée par l'intermédiaire de la courroie.

Avantageusement, la poulie menée est à une extrémité de l'organe de détente alors que la poulie menante est agencée à une extrémité de l'organe de contrôle externe, les poulies étant alignées selon un axe d'extension de la courroie.

Avantageusement, l'organe de détente et l'organe de contrôle externe peuvent présenter une forme générale rectangulaire ou parallélépipédique.

Selon une alternative de conception, le dispositif d'entraînement est un arbre de transmission. Dans cet agencement, l'organe de contrôle externe entraîne le dispositif d'entraînement en rotation autour de son axe d'extension.

Avantageusement encore, l'organe de détente comprend un engrenage mené relié mécaniquement à un moyen de détente de l'organe de détente. Par ailleurs, l'organe de contrôle externe comporte un engrenage menant coopérant avec le système d'entraînement. L'engrenage mené et l'engrenage menant coopèrent entre eux afin de transmettre le mouvement de l'organe de contrôle externe à l'organe de détente. Préférentiellement, les engrenages sont des engrenages à pignons droits bu coniques.

Selon la présente invention, l'organe de détente comprend également un organe de commande interne de l'organe de détente. L'organe de commande interne et l'organe de contrôle externe sont distincts. Généralement, l'organe de commande interne est constitué d'un bulbe thermostatique soumis à la température et/ou à la pression du fluide réfrigérant qui traverse le dispositif de détente. Ainsi, l'organe de commande interne et l'organe de contrôle externe agissent de manière antagoniste sur le moyen de détente de l'organe de détente.

Dans une solution particulièrement avantageuse, l'organe de contrôle externe est un moteur électrique, par exemple un moteur pas-à-pas.

La présente invention vise également une installation de chauffage, ventilation et/ou climatisation comprenant un circuit de climatisation parcouru par un fluide réfrigérant transporté par des tubes. L'installation de chauffage, ventilation et/ou climatisation comprend un dispositif de régulation de détente tel que défini précédemment.

De plus, l'organe de détente est relié fluidiquement aux tubes, c'est-à-dire que l'assemblage des tubes et de l'organe de détente permet le passage du fluide réfrigérant des tubes vers l'organe de détente et réciproquement. Avantageusement, l'organe de contrôle externe est solidarisé mécaniquement à au moins un des tubes ou est solidarisé mécaniquement sur deux tubes ou est solidarisé mécaniquement entre les deux tubes.

Au moins un des tubes s'étend dans une direction longitudinale. Ainsi, l'organe de contrôle externe s'étend dans une direction longitudinale parallèle ou perpendiculaire à la direction longitudinale du tube.

L'installation de chauffage, ventilation et/ou climatisation comprend également un boîtier et un évaporateur relié au circuit de climatisation par l'intermédiaire des tubes. L'organe de contrôle externe est solidarisé mécaniquement sur le boîtier de l'installation de chauffage, ventilation et/ou climatisation.

Un avantage de la présente invention réside dans la disposition de l'organe de contrôle externe qui se trouve avantageusement installé dans le compartiment habitacle où les contraintes thermiques sont moindres, ce qui permet d'utiliser un organe de contrôle externe qui n'a pas besoin de résister à de fortes températures.

Un autre avantage réside dans une certaine standardisation des composants de l'installation de chauffage, ventilation et/ou climatisation. En effet, l'installation de chauffage, ventilation et/ou climatisation comporte déjà des actionneurs électriques qui commandent le déplacement de volets gérant la répartition d'un flux d'air destiné à être distribué dans l'habitacle du véhicule. Ces actionneurs étant déjà développés pour résister aux contraintes techniques à l'intérieur de l'habitacle, il est aisé de les utiliser à nouveau comme composant principal de l'organe de contrôle externe, l'architecture électrique, le câblage et la commande étant similaires.

D'autres caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation, mais aussi, le cas échéant, contribuer à sa définition sur lesquels:
- les figures 1 a et 1 b sont des vues schématiques de circuits de climatisation comprenant un organe de détente selon la présente invention,
- la figure 2 est une vue schématique d'une installation de chauffage, ventilation, et/ou climatisation portant un organe de détente selon la présente invention,
- la figure 3 est une vue détaillée de l'organe de détente de la figure 2,
- la figure 4 est une vue schématique d'une variante de l'organe de détente qui n'appartient pas à l'invention,
- la figure 5 est une vue agrandie de l'organe de détente selon la la figure 4,
- la figure 6 est une vue en perspective de tubes du circuit de climatisation coopérant avec l'organe de détente selon une première variante de la présente invention,
- la figure 7 est une vue en coupe d'une variante de fixation sur les tubes telle qu'illustrée à la figure 6,
- la figure 8 est une vue en perspective des tubes du circuit de climatisation coopérant avec l'organe de détente selon une deuxième variante de la présente invention,
- la figure 9 est une vue en coupe de la deuxième variante de la présente invention selon la figure 8,
- la figure 10 est une vue en perspective des tubes du circuit de climatisation coopérant avec l'organe de détente selon une troisième variante qui n'appartient pas à l'invention, et
- la figure 11 est une vue en coupe de l'organe de détente selon la figure 10.

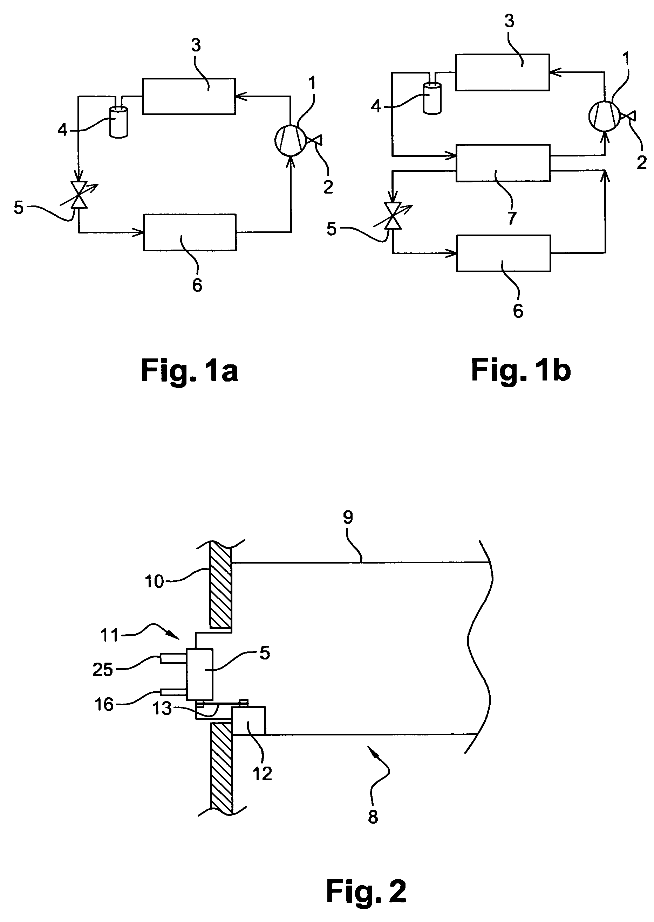

Les figures 1 a et 1 b sont des vues schématiques de circuits de climatisation comprenant un organe de détente selon la présente invention. En particulier, la figure 1 a illustre un circuit de climatisation parcouru par un fluide réfrigérant, notamment destiné à équiper un véhicule automobile.

Le circuit de climatisation comprend un compresseur 1 pouvant être à cylindrée fixe ou à cylindrée variable. Lorsque le compresseur 1 est à cylindrée variable, le compresseur est contrôlé par une vanne de contrôle 2.

Le compresseur 1 comprime le fluide réfrigérant et l'envoie vers un refroidisseur de gaz 3 ou condenseur 3, avantageusement disposé en face avant du véhicule de sorte à être traversé par un flux d'air extérieur au véhicule. Une sortie du condenseur 3 est raccordée à une bouteille 4 apte à permettre le stockage du fluide réfrigérant.

Une sortie de la bouteille 4 est raccordée à une entrée d'un organe de détente 5 alors qu'une sortie de l'organe de détente 5 est raccordée à un évaporateur 6. L'évaporateur 6 est traversé par un flux d'air intérieur destiné à être distribué à l'intérieur d'un habitacle du véhicule. A la traversée de l'évaporateur 6, le flux d'air intérieur est refroidi et/ou déshumidifié par échange thermique avec le fluide réfrigérant circulant dans l'évaporateur 6. Le flux d'air intérieur est alors envoyé dans l'habitacle du véhicule en vue d'assurer le confort des passagers du véhicule.

Le circuit de climatisation selon la figure 1 a peut être modifié en remplaçant la bouteille 4 par un accumulateur installé entre une sortie de l'évaporateur 6 et une entrée du compresseur 1.

De même, le circuit de climatisation selon la figure 1 a peut par ailleurs être complété, tel que présenté en figure 1 b, par un échangeur de chaleur interne 7 dont la fonction est de permettre un échange thermique entre la partie du circuit du climatisation à haute pression, entre la sortie de l'évaporateur 6 et l'entrée du compresseur 1, et la partie du circuit du climatisation à basse pression, entre la sortie du condenseur 3 et l'entrée de l'organe de détente 5.

L'évaporateur 6 est monté dans une installation de chauffage, ventilation, et/ou climatisation 8, préférentiellement agencée dans l'habitacle du véhicule. Plus particulièrement, la figure 2 est une vue schématique de l'installation de chauffage, ventilation, et/ou climatisation 8 portant l'organe de détente 5 selon la présente invention.

L'installation de chauffage, ventilation et/ou climatisation 8 est constituée d'un boîtier 9 formant une enveloppe à l'intérieur de laquelle circule le flux d'air intérieur apte à être envoyé dans l'habitacle et logeant l'évaporateur 6. L'installation de chauffage, ventilation, et/ou climatisation 8 est fixée contre une paroi 10 du véhicule assurant une séparation entre l'habitacle et un compartiment moteur, à l'intérieur duquel est disposé un moteur, à combustion interne ou électrique, propulsant le véhicule. La paroi 10 est également connue sous l'appellation « paroi pare-feu » et présente une ouverture 11 au travers de laquelle est disposé l'organe de détente 5.

Selon la présente invention, l'installation de chauffage, ventilation et/ou climatisation 8 comporte un dispositif de régulation de détente du circuit de climatisation. Plus particulièrement, le dispositif de régulation de détente est constitué de l'organe de détente 5 couplé à un organe de contrôle externe 12 apte à modifier le fonctionnement de l'organe de détente 5. L'organe de détente 5 et l'organe de contrôle externe 12 sont des composants distincts et séparés physiquement l'un de l'autre. Néanmoins, l'organe de détente 5 et l'organe de contrôle externe 12 sont reliés mécaniquement l'un à l'autre par l'intermédiaire d'un dispositif d'entraînement 13.

Plus particulièrement, selon une alternative de réalisation, l'organe de détente 5 est installé dans le compartiment moteur alors que l'organe de contrôle externe 12 est installé dans l'habitacle. On comprend donc que l'organe de détente 5 et l'organe de contrôle externe 12 sont distant l'un de l'autre, c'est-à-dire séparés l'un de l'autre par une distance suffisante pour que l'organe de détente 5 soit placé du côté du compartiment moteur alors que l'organe de contrôle externe 12 est monté du côté de l'habitacle.

Avantageusement, l'organe de détente 5 est un organe de détente à commande thermostatique. La commande thermostatique constitue dans son ensemble un organe de commande interne de l'organe de détente 5. L'organe de commande interne est constitué, généralement, par un bulbe thermostatique comportant une membrane dont une face est baignée par le fluide réfrigérant, notamment le fluide réfrigérant circulant entre la sortie de l'évaporateur 6 et l'entrée du compresseur 1, c'est-à-dire la partie basse pression du circuit de climatisation.

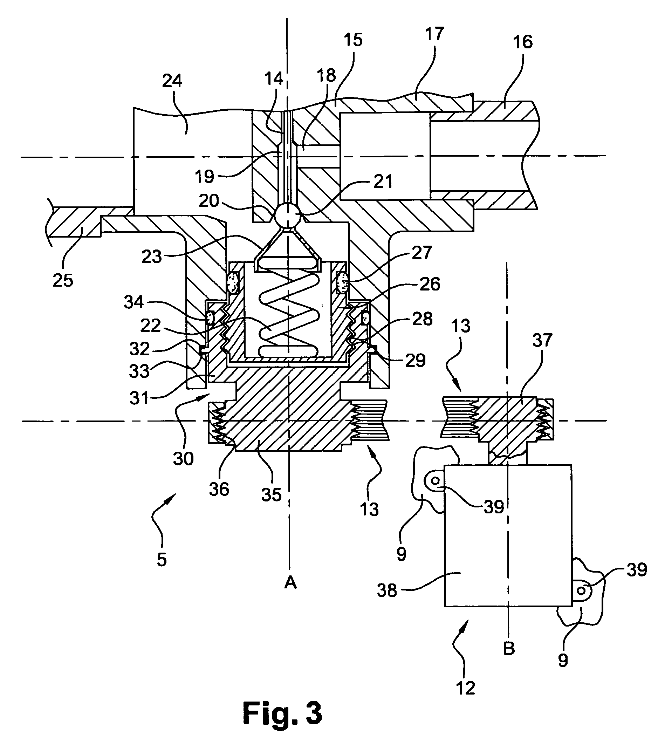

La membrane du bulbe thermostatique est reliée à une tige d'actionnement 14 visible sur la figure 3, constituant une vue détaillée de l'organe de détente de la figure 2. La tige d'actionnement 14 se déplace en fonction du déplacement de la membrane, régi par la pression et/ou la température du fluide réfrigérant, notamment sortant de l'évaporateur 6. L'organe de commande interne gère donc le débit de fluide réfrigérant circulant à travers l'organe de détente 5 en fonction de paramètres qui sont le reflet de caractéristiques internes du circuit de climatisation, en particulier la pression et/ou la température du fluide réfrigérant.

L'organe de détente 5 est également géré par l'organe de contrôle externe 12 susceptible d'agir sur un moyen de réglage de la détente et donc sur le débit de fluide réfrigérant qui circule au travers de l'organe de détente 5. L'organe de contrôle externe 12 agit sur l'organe de détente 5 en fonction de différents paramètres, en particulier une surchauffe en sortie d'évaporateur 6.

La surchauffe en sortie d'évaporateur 6 est définie par l'écart entre la température du fluide réfrigérant telle que définie par la courbe de saturation du fluide réfrigérant et la température attendue ou désirée telle que définie par des conditions extérieures au circuit de climatisation. A titre d'exemple, les conditions extérieures sont la vitesse du véhicule, la vitesse de rotation du moteur du véhicule, la vitesse de rotation d'un groupe moto-ventilateur mettant en mouvement le flux d'air à l'intérieur de l'installation de chauffage, ventilation et/ou climatisation, la température extérieure au véhicule, la température demandée par un utilisateur du véhicule, la vitesse de rotation du compresseur, etc.

Les conditions extérieures sont susceptibles de varier. Il est d'intérêt de contrôler l'organe de détente 5 au moyen de l'organe de contrôle externe 12 de sorte à ajuster la surchauffe aux conditions extérieures et ainsi maintenir un rendement maximum du circuit de climatisation en toutes conditions.

L'organe de contrôle externe 12 prend la forme d'un actionneur manuel, électrique, pneumatique ou analogue. L'exemple de réalisation présenté présente l'organe de contrôle externe 12 sous la forme d'un actionneur électrique 12.

Avantageusement, l'actionneur électrique 12 est un moteur électrique pas-à-pas contrôlé par un signal de commande, par exemple du type PWM (de l'anglais Pulse Width Modulation), LIN ou CAN, en provenance d'une unité de contrôle du moteur ou d'une unité de gestion thermique équipant le véhicule automobile.

Le dispositif d'entraînement 13 est un moyen de transmission mécanique 13 entre l'organe de contrôle externe 12 et l'organe de détente 5. En particulier, le moyen de transmission mécanique 13 permet de relayer un mouvement, en particulier le mouvement de rotation, émis par l'organe de contrôle externe 12 vers l'organe de détente 5. Selon une alternative de réalisation, le dispositif d'entraînement 13 est une courroie, du type plate, en « V », poly « V », crantée ou équivalente.

Alternativement, le dispositif d'entraînement 13 est un arbre de transmission 40, susceptible d'être rigide ou flexible, solidaire de l'organe de contrôle externe 12, comme cela sera détaillé ci-après.

La figure 3 montre de manière plus détaillée l'organe de détente 5 et ses composants. L'organe de détente 5 comprend un corps 15, généralement usiné à partir d'un bloc d'aluminium. Le fluide réfrigérant arrive dans l'organe de détente 5 par l'intermédiaire d'un tube haute pression 16 et pénètre dans l'organe de détente 5 par une entrée haute pression 17.

Le fluide réfrigérant sort de l'organe de détente 5 par un tube basse pression 25 connecté à une sortie basse pression 24 de l'organe de détente 5. Par suite, le tube basse pression 25 permet le transport du fluide réfrigérant jusqu'à l'évaporateur 6.

Dans l'organe de détente 5, entre l'entrée haute pression 17 et la sortie basse pression 24, le fluide réfrigérant circule dans un canal de détente. Selon l'exemple de réalisation, le canal de détente est constitué d'une première conduite 18, agencée coaxialement avec l'entrée haute pression 17, et d'une deuxième conduite 19 disposée perpendiculairement à la première conduite 18.

Le canal de détente, en particulier la deuxième conduite 19, est terminé, au niveau de la jonction avec la sortie basse pression 24, par une zone de réception 20, ou cône de réception 20, coopérant avec une bille 21 ou équivalent, constituant en combinaison le moyen de détente de l'organe de détente 5.

L'abaissement de la pression par l'intermédiaire de l'organe de détente 5 intervient par un passage créé entre la zone de réception 20 et la bille 21 soumise à la force de la tige d'actionnement 14. La tige d'actionnement 14 permet un déplacement en translation de la bille 21 sous la contrainte de l'organe de commande interne. Le déplacement en translation de la bille 21 libère ainsi le passage permettant d'assurer la détente du fluide réfrigérant.

En position de repos, la bille 21 est maintenue en appui contre la zone de réception 20 au moyen d'un organe de contrainte, réalisé, selon l'exemple de réalisation, d'un ressort 22 et d'un support 23. L'organe de contrainte assure une force contraire à la force exercée par la tige d'actionnement 14 sous l'action de l'organe de commande interne de l'organe de détente 5.

Le fluide réfrigérant détendu par le passage entre la bille 21 et la zone de réception 20 circule en direction de la sortie basse pression 24 puis au travers du tube basse pression 10.

Le ressort 22 est logé dans un évidement d'un boisseau 26. Le boisseau 26 est assemblé dans le corps 15 de l'organe de détente 5. Pour assurer un assemblage étanche, un premier joint d'étanchéité 27 est disposé entre une paroi périphérique extérieure du boisseau 26 et un alésage pratiqué dans le corps 15.

Plus spécifiquement, le boisseau 26 est monté dans un élément d'accouplement 30. A cet effet, la paroi périphérique extérieure du boisseau 26 comprend un filetage secondaire 28 coopérant avec un filetage primaire 29 formé sur l'élément d'accouplement 30.

Selon la présente invention, le moyen de réglage de la détente est constitué par l'élément d'accouplement 30 et le boisseau 26 permettant d'agir sur l'organe de contrainte, en particulier sur le ressort 22.

L'élément d'accouplement 30 comprend un réceptacle 31 pourvu d'un évidement sur la paroi interne duquel est formé le filetage primaire 29. Par ailleurs, la paroi périphérique externe du réceptacle 31 comporte une nervure de guidage 32. La nervure de guidage 32 coopère avec une rainure 33 formée dans l'alésage pratiqué dans le corps 15 de l'organe de détente 5. Optionnellement, un deuxième joint d'étanchéité 34 est interposé entre la paroi périphérique externe du réceptacle 31 et l'alésage pratiqué dans le corps 15 pour garantir une étanchéité entre le circuit de climatisation et l'environnement extérieur.

Selon une première variante, l'élément d'accouplement 30 comprend une poulie menée 35, disposée à l'opposé du réceptacle 31. Selon le mode de réalisation présenté à la figure 3, la poulie menée 35 comporte une multiplicité de gorges, au nombre de cinq sur l'exemple de la figure 3. Il s'agit ici d'un exemple non limitatif puisque une unique gorge, notamment en « V », peut être pratiquée en lieu et place de la multiplicité de gorges.

Le dispositif d'entraînement 13 prend, d'après la variante présentée sur la figure 3, la forme d'une courroie 36. De façon complémentaire, la courroie 36 peut être élastique. Par ailleurs, l'utilisation de la courroie 36 permet d'absorber d'éventuels jeux de fabrication.

La courroie 36 est une boucle fermée installée en prise d'un côté.sur la poulie menée 35 et de l'autre sur une poulie menante 37. La poulie menante 37 est fixée à une extrémité d'un axe de l'organe de contrôle externe 12. La courroie 36 fait partie intégrante de l'organe de contrôle externe 12.

Par ailleurs, l'organe de contrôle externe 12 comprend un boîtier de réception 38 d'un moteur électrique. Le boîtier de réception 38 présente des organes de fixation 39, sous la forme de deux oeillets 39 comportant chacun un trou pour installer des moyens de solidarisation, par exemple une vis. Les moyens de solidarisation sont fixés sur le boîtier 9 de l'installation de chauffage, ventilation et/ou climatisation 8.

Dans la première variante de l'invention présentée à la figure 3, l'organe de détente 5 est de forme générale parallélépipédique, Il présente donc une direction d'extension longitudinale selon laquelle est mesurée sa longueur et une direction d'extension transversale selon laquelle est mesurée sa largeur.

Dans la direction d'extension longitudinale, l'organe de détente 5 s'étend selon un axe longitudinal primaire A et l'organe externe de contrôle 12 s'étend selon un axe longitudinal secondaire B. L'axe longitudinal primaire A et l'axe longitudinal secondaire B sont parallèles et distincts.

Par ailleurs, la poulie menée 35 et la poulie menante 37 sont contenues dans un plan perpendiculaire à l'axe longitudinal primaire A et à l'axe longitudinal secondaire B.

Préférentiellement, la poulie menée 35 et la poulie menante 37 comportent des centres respectifs disposés sur un axe transversal perpendiculaire à l'axe longitudinal primaire A et à l'axe longitudinal secondaire B. Un tel agencement permet au dispositif d'entraînement 13 de travailler dans un même plan.

Lorsque l'organe de contrôle externe 12 reçoit un ordre afin d'adapter la surchauffe en sortie d'évaporateur, l'organe de contrôle externe 12 met en rotation la poulie menante 37 et entraîne ainsi le dispositif d'entraînement 13, entraînant à son tour la poulie menée 35. La rotation dans un sens horaire ou dans le sens anti-horaire de l'élément d'accouplement 30, dont tout déplacement en translation est rendu impossible par la coopération de la nervure de guidage 32 dans la rainure 33, provoque une rotation du filetage secondaire 28. Ceci entraine un déplacement en translation du boisseau 26 selon la direction d'extension longitudinale le long de l'axe longitudinal primaire A.

La force de compression du ressort 22 peut ainsi être modulée en fonction des conditions extérieures au circuit de climatisation dont les paramètres permettent de définir le signal de commande de l'organe de contrôle externe 12. En pratique, la force exercée par la tige d'actionnement 14 pour déplacer la bille 21 de la zone de réception 20 est ainsi modifiée en conséquence.

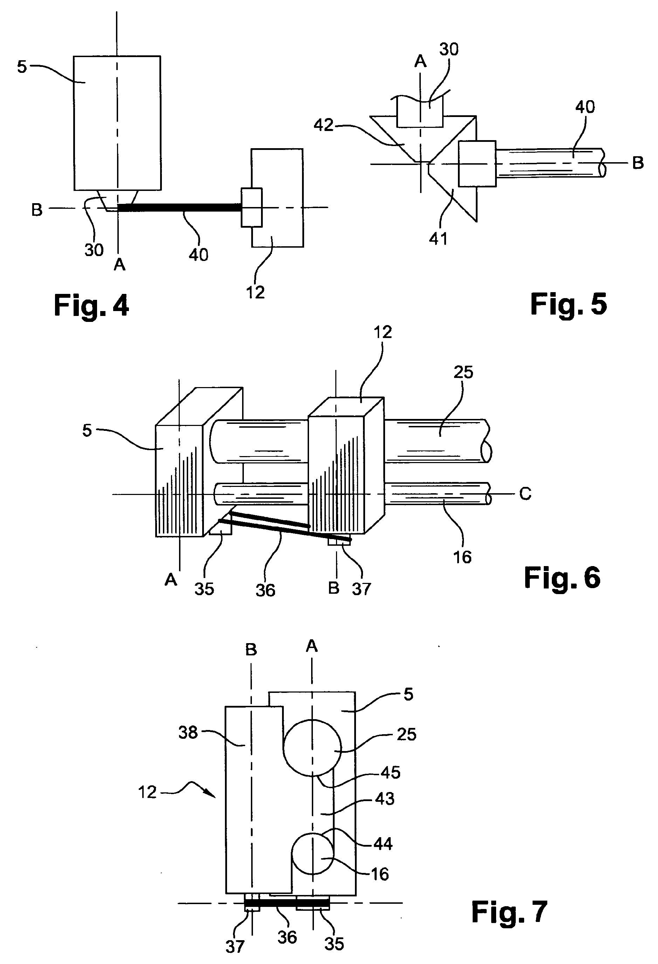

La figure 4 illustre un mode de réalisation qui ne fait pas partie de l'invention. Ce mode de réalisation diffère du premier exemple par le fait que le dispositif d'entraînement 13 est réalisé sous la forme d'un arbre de transmission 40, rigide ou flexible, en remplacement de la courroie 36. L'arbre de transmission 40 est mise en rotation au moyen de l'organe de contrôle externe 12 et entraîne en rotation l'élément d'accouplement 30.

Selon la variante de la figure 4, l'organe de détente 5 s'étend selon un axe longitudinal primaire A et l'organe externe de contrôle 12 s'étend selon un axe longitudinal secondaire B. Avantageusement, l'axe longitudinal primaire A et l'axe longitudinal secondaire B sont perpendiculaires entre eux.

La figure 5 est une vue de détail de l'organe de détente 5 selon la deuxième variante de réalisation illustrée à la figure 4. Elle montre la coopération entre l'élément d'accouplement 30 de l'organe de détente 5 et l'arbre de transmission 40 réalisée par l'intermédiaire d'une liaison par engrenages. En particulier, l'arbre de transmission 40 comporte à son extrémité libre un engrenage menant 41, avantageusement conique et solidaire de l'arbre de transmission 40. Par ailleurs, l'engrenage menant 41 coopère avec un engrenage mené 42, avantageusement conique et solidaire de rotation l'élément d'accouplement 30, entraînant en rotation l'élément d'accouplement 30. Dans la configuration de la figure 5, la poulie menée 35 est remplacée par l'engrenage mené 42 et la poulie menante 37 est remplacé par l'engrenage menant 41.

La figure 6 est une vue en perspective de tubes du circuit de climatisation coopérant avec l'organe de détente 5 selon une autre variante de la présente invention. Elle montre l'organe de détente 5 monté sur le tube haute pression 16 et le tube basse pression 25. Le tube haute pression 16 et le tube basse pression 25 font partie du circuit de climatisation.

Préférentiellement, le tube haute pression 16 et le tube basse pression 25 s'étendent dans une direction correspondant sensiblement à une direction d'extension C parallèle à la direction d'alignement de la poulie menée 35 et de la poulie menante 37.

De plus, l'organe de détente 5 est positionné de sorte que l'axe longitudinal primaire A soit perpendiculaire à la direction d'extension C du tube haute pression 16 et l'axe du tube basse pression 25. L'organe de détente 5 est relié fluidiquement avec le tube haute pression 16 et le tube basse pression 25, c'est-à-dire que l'organe de détente 5 reçoit ou laisse passer le fluide réfrigérant en provenance du tube haute pression 16 et du tube basse pression 25.

Enfin, l'organe de contrôle externe 12 est positionné perpendiculairement et contre le tube haute pression 16 et le tube basse pression 25 pour y être solidarisé ou fixé mécaniquement. La fixation de l'organe de contrôle externe 12 intervient, par exemple, au moyen d'une bride placée à l'opposé de l'organe externe de contrôle 12 par rapport au tube haute pression 16 et au tube basse pression 25.

La figure 7 est une vue en coupe d'une variante de fixation de l'organe externe 12 sur le tube haute pression 16 et le tube basse pression 25 telle qu'illustrée à la figure 6. Dans le cas présent, le boîtier de réception 38 de l'organe de contrôle externe 12 intègre une bride 43 constituant une extension du boîtier de réception 38. La bride 43 présente deux logements de réception 44 et 45 aptes à recevoir, respectivement, le tube haute pression 16 et le tube basse pression 25.

Préférentiellement, les deux logements de réception 44 et 45 sont de forme semi-circulaire complémentaire respectivement à la forme du tube haute pression 16 et du tube basse pression 25. La forme semi-circulaire des logements de réception 44 et 45 épouse la forme circulaire du tube haute pression 16 et du tube basse pression 25 de sorte à garantir un montage aisé de l'organe de contrôle externe 12 sur le tube haute pression 16 et le tube basse pression 25, une solidarisation fiable et un alignement parfait de la poulie menante 37, le dispositif d'entraînement 13 et la poulie menée 35.

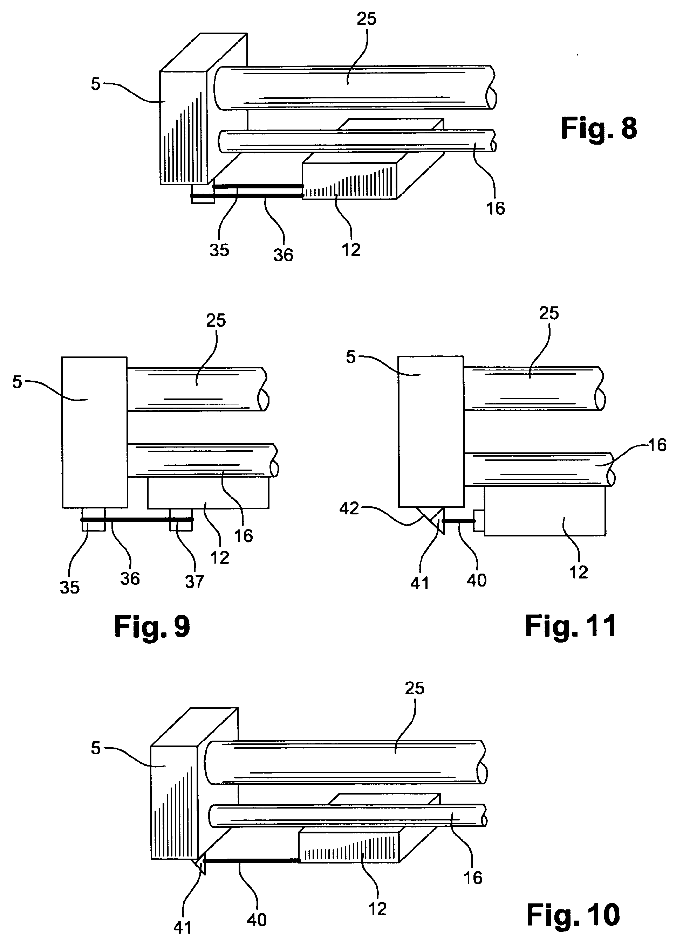

Les figures 8 et 9 montrent une variante de fixation de l'organe de contrôle externe 12 dans lequel le dispositif d'entraînement 13 est constitué par la courroie 36. Dans cet exemple de réalisation, l'organe de détente 5 est relié fluidiquement au tube haute pression 16 et au tube basse pression 25. L'organe de contrôle externe 12 est solidarisé à un seul des tubes, en particulier le tube haute pression 16. A la différence des variantes précédentes, la poulie menante 37 ne débouche pas à l'extrémité de l'organe externe 12 de contrôle. La poulie menante 37 est diposée sur une des grandes faces de l'organe de contrôle externe 12, l'autre grande face étant contre le tube haute pression 16 et dédié à la solidarisation de l'organe externe de contrôle 12. Dans cette variante de fixation, la poulie menante 37, le dispositif d'entraînement 13 et la poulie menée 35 sont alignés sur une même direction.

Les figures 10 et 11 illustrent une autre alternative similaire à celle des figures 8 et 9 pour ce qui est de la solidarisation de l'organe de contrôle externe 12. Cette alternative ne fait pas partie de l'invention. En revanche, le dispositif d'entraînement 13 de l'organe de détente 5 est assuré ici par l'arbre de transmission 40 et l'élément d'accouplement 30 est formé par l'engrenage menant 41 et l'engrenage mené 42. Dans cet exemple de réalisation, l'organe de détente 5 est relié fluidiquement au tube haute pression 16 et au tube basse pression 25. L'organe de contrôle externe 12 est solidarisé ou relié mécaniquement à un seul des tubes, en particulier le tube haute pression 16. L'arbre de transmission 40 débouche d'une extrémité de l'organe de contrôle externe 12, plus particulièrement une extrémité qui fait face à l'organe de détente 5. L'engrenage menant 41 est solidarisé en bout de l'arbre de transmission 40 et est entraîné en rotation. L'engrenage menant 41 entraîne ainsi mécaniquement en rotation l'engrenage mené 42 solidaire de l'organe de détente 5.

Les alternatives de réalisation présentées aux figures 8 à 11 conviennent particulièrement bien quand l'organe de contrôle externe 12 ne peut être fixé ou monté sur le boîtier 3 de l'installation de chauffage, ventilation et/ou climatisation 8 ou quand la place disponible le long du tube haute pression 16 et/ou du tube basse pression 25 n'est pas suffisante pour fixer le organe de contrôle externe 12.

D'une manière générale, on notera que l'organe de détente 5 comprend un moyen de détente, par exemple la bille 21 coopérant avec la zone de réception 20, commandé par l'organe de commande interne lui-même placé sous la dépendance de la température et/ou de la pression du fluide réfrigérant qui passe au travers de l'organe de détente 5. De plus, l'organe de détente 5 est reconnaissable en ce qu'il comprend en outre un dispositif pour contrôler le moyen de détente, le dispositif étant à commande mécanique, avantageusement à commande mécanique en rotation.

Le dispositif à commande mécanique est par exemple une poulie menante 35 ou un engrenage menant 42 et est commandé ou piloté par un organe de contrôle externe 12 distinct de l'organe de détente 5. De plus, selon un mode particulier de réalisation de la présente invention, le dispositif d'entraînement 13 est apte à traverser l'ouverture 11 agencée dans la paroi 10 séparant le compartiment moteur et l'habitacle.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que définit par les revendications.

## Revendications

1. Dispositif de régulation de détente pour un circuit de climatisation comprenant un organe de détente (5) et un organe de contrôle externe (12) de l'organe de détente (5), l'organe de détente (5) et l'organe externe de contrôle (12) étant distants l'un de l'autre et reliés l'un à l'autre par un dispositif d'entraînement (13), l'organe de détente (5) comprenant un organe de commande interne de l'organe de détente (5) distinct de l'organe de contrôle externe (12), et un moyen de réglage de la détente, **caractérisé en ce que** le dispositif d'entrainement (13) transmet un mouvement de l'organe de contrôle externe (12) vers l'organe de détente (5), et **en ce que** l'organe de détente (5) s'étend selon un axe longitudinal primaire (A) et l'organe de contrôle externe (12) s'étend selon un axe longitudinal secondaire (B) parallèle et distinct de l'axe longitudinal primaire (A).

2. Dispositif de régulation de détente selon la revendication 1, dans lequel le dispositif d'entraînement (13) est une courroie (36).

3. Dispositif de régulation de détente selon la revendication 2, dans lequel l'organe de détente (5) comprend une poulie menée (35) reliée à un moyen de détente (20, 21) de l'organe de détente (5) et en ce que l'organe de contrôle externe (12) comprend une poulie menante (37) reliée à la poulie menée (35) par la courroie (36).

4. Dispositif de régulation de détente selon la revendication 1, dans lequel le dispositif d'entraînement (13) est un arbre de transmission (40).

5. Dispositif de régulation de détente selon l'une quelconque des revendications 1 à 3, dans lequel l'organe de détente (5) comprend un engrenage mené (42) relié à un moyen de détente (20, 21) de l'organe de détente (5) et en ce que l'organe de contrôle externe (12) comporte un engrenage menant (41) coopérant avec le dispositif d'entraînement (13).

6. Dispositif de régulation de détente selon la revendication 5, dans lequel les engrenages (41, 42) sont coniques.

7. Dispositif de régulation de détente selon l'une quelconque des revendications précédentes, dans lequel l'organe de contrôle externe (12) comprend un moteur électrique.

8. Dispositif de régulation de détente selon l'une quelconque des revendications précédentes, dans lequel le moyen de réglage de la détente est constitué par un élément d'accouplement (30) et un boisseau (26) permettant d'agir sur un organe de contrainte de l'organe de détente (5).

9. Installation de chauffage, ventilation et/ou climatisation (8) comprenant un circuit de climatisation parcouru par un fluide réfrigérant transporté par des tubes (16, 25), **caractérisée en ce que** l'installation de chauffage, ventilation et/ou climatisation (8) comprend un dispositif de régulation de détente selon l'une quelconque des revendications précédentes.

10. Installation de chauffage, ventilation et/ou climatisation (8) selon la revendication 9, **caractérisée en ce que** l'organe de détente (5) est relié fluidiquement aux tubes (16, 25) et **en ce que** l'organe de contrôle externe (12) est solidarisé mécaniquement à au moins un des tubes (16, 25).

11. Installation de chauffage, ventilation et/ou climatisation (8) selon la revendication 9 ou 10, comprenant un boîtier (9) et un évaporateur (6) relié au circuit de climatisation par l'intermédiaire des tubes (16, 25), **caractérisé en ce que** l'organe de contrôle externe (12) est solidarisé mécaniquement sur le boîtier (9) de l'installation de chauffage, ventilation et/ou climatisation (8).

## Patentansprüche

1. Vorrichtung zur Expansionsregelung für einen Klimatisierungskreislauf, der ein Expansionsorgan (5) und ein externes Steuerorgan (12) des Expansionsorgans (5) enthält, wobei das Expansionsorgan (5) und das externe Steuerorgan (12) einen Abstand zueinander haben und miteinander durch eine Antriebsvorrichtung (13) verbunden sind, wobei das Expansionsorgan (5) ein internes Steuerorgan des Expansionsorgans (5), das sich vom externen Steuerorgan (12) unterscheidet, und eine Einstelleinrichtung der Expansion enthält, **dadurch gekennzeichnet, dass** die Antriebsvorrichtung (13) eine Bewegung des externen Steuerorgans (12) an das Expansionsorgan (5) überträgt, und dass das Expansionsorgan (5) sich gemäß einer primären Längsachse (A) und das externe Steuerorgan (12) sich gemäß einer sekundären Längsachse (B) parallel und unterschiedlich zur primären Längsachse (A) erstreckt.

2. Expansionsregelungsvorrichtung nach Anspruch 1, wobei die Antriebsvorrichtung (13) ein Riemen (36) ist.

3. Expansionsregelungsvorrichtung nach Anspruch 2, wobei das Expansionsorgan (5) eine mit einer Expansionseinrichtung (20, 21) des Expansionsorgans (5) verbundene getriebene Scheibe (35) enthält, und dass das externe Steuerorgan (12) eine treibende Scheibe (37) enthält, die mit der getriebenen Scheibe (35) durch den Riemen (36) verbunden ist.

4. Expansionsregelungsvorrichtung nach Anspruch 1, wobei die Antriebsvorrichtung (13) eine Antriebswelle (40) ist.

5. Expansionsregelungsvorrichtung nach einem der Ansprüche 1 bis 3, wobei das Expansionsorgan (5) ein getriebenes Zahnrad (42) enthält, das mit einer Expansionseinrichtung (20, 21) des Expansionsorgans (5) verbunden ist, und dass das externe Steuerorgan (12) ein treibendes Zahnrad (41) aufweist, das mit der Antriebsvorrichtung (13) zusammenwirkt.

6. Expansionsregelungsvorrichtung nach Anspruch 5, wobei die Zahnräder (41, 42) Kegelräder sind.

7. Expansionsregelungsvorrichtung nach einem der vorhergehenden Ansprüche, wobei das externe Steuerorgan (12) einen Elektromotor enthält.

8. Expansionsregelungsvorrichtung nach einem der vorhergehenden Ansprüche, wobei die Einstelleinrichtung der Expansion aus einem Kopplungselement (30) und einem Ventileinsatz (26) besteht, der es ermöglicht, auf ein Spannungsorgan des Expansionsorgans (5) einzuwirken.

9. Heizungs-, Lüftungs- und/oder Klimaanlage (8), die einen Klimatisierungskreislauf enthält, der von einem von Rohren (16, 25) transportierten Kühlmittel durchflossen wird wird, **dadurch gekennzeichnet, dass** die Heizungs-, Lüftungs- und/oder Klimaanlage (8) eine Expansionsregelungsvorrichtung nach einem der vorhergehenden Ansprüche enthält.

10. Heizungs-, Lüftungs- und/oder Klimaanlage (8) nach Anspruch 9, **dadurch gekennzeichnet, dass** das Expansionsorgan (5) fluidisch mit den Rohren (16, 25) verbunden ist, und dass das externe Steuerorgan (12) mechanisch mit mindestens einem der Rohre (16, 25) fest verbunden ist.

11. Heizungs-, Lüftungs- und/oder Klimaanlage (8) nach Anspruch 9 oder 10, die ein Gehäuse (9) und einen Verdampfer (6) enthält, der mit dem Klimatisierungskreislauf über die Rohre (16, 25) verbunden ist, **dadurch gekennzeichnet, dass** das externe Steuerorgan (12) mechanisch fest mit dem Gehäuse (9) der Heizungs-, Lüftungs- und/oder Klimaanlage (8) verbunden ist.

## Claims

1. Expansion regulation device for an air conditioning circuit comprising an expansion member (5) and an external control member (12) for the expansion member (5), the expansion member (5) and the external control member (12) being remote from one another and linked to one another by a driving device (13), the expansion member (5) comprising an internal control member for the expansion member (5) distinct from the external control member (12), and an expansion adjustment means, **characterized in that** the driving device (13) transmits a movement from the external control member (12) to the expansion member (5), and **in that** the expansion member (5) extends along a primary longitudinal axis (A) and the external control member (12) extends along a secondary longitudinal axis (B) parallel to and distinct from the primary longitudinal axis (A).

2. Expansion regulation device according to Claim 1, in which the driving device (13) is a belt (36).

3. Expansion regulation device according to Claim 2, in which the expansion member (5) comprises a driven pulley (35) linked to an expansion means (20, 21) of the expansion member (5) and in that the external control member (12) comprises a driving pulley (37) linked to the driven pulley (35) by the belt (36).

4. Expansion regulation device according to Claim 1, in which the driving device (13) is a transmission shaft (40).

5. Expansion regulation device according to any one of Claims 1 to 3, in which the expansion member (5) comprises a driven gear (42) linked to an expansion means (20, 21) of the expansion member (5) and in that the external control member (12) comprises a driving gear (41) cooperating with the driving device (13).

6. Expansion regulation device according to Claim 5, in which the gears (41, 42) are bevel gears.

7. Expansion regulation device according to any one of the preceding claims, in which the external control member (12) comprises an electric motor.

8. Expansion regulation device according to any one of the preceding claims, in which the expansion adjustment means consists of a coupling element (30) and a plug (26) making it possible to act on a strain member of the expansion member (5).

9. Heating, ventilation and/or air conditioning installation (8) comprising an air conditioning circuit passed through by a refrigerant conveyed by pipes (16, 25), **characterized in that** the heating, ventilation and/or air conditioning installation (8) comprises an expansion regulation device according to any one of the preceding claims.

10. Heating, ventilation and/or air conditioning installation (8) according to Claim 9, **characterized in that** the expansion member (5) is fluidically linked to the pipes (16, 25) and **in that** the external control member (12) is mechanically secured to at least one of the pipes (16, 25).

11. Heating, ventilation and/or air conditioning installation (8) according to Claim 9 or 10, comprising a housing (9) and an evaporator (6) linked to the air conditioning circuit via the pipes (16, 25), **characterized in that** the external control member (12) is mechanically secured to the housing (9) of the heating, ventilation and/or air conditioning installation (8).
